# FASCICULE DE BREVET EUROPEEN

(11) **EP 3 001 046 B1**
(45) Date de publication et mention de la délivrance du brevet: **26.04.2017**
(21) Numéro de dépôt: 15178721.5
(22) Date de dépôt: 28.07.2015
(51) Int. Cl.: F16B 45/02

(54) **MOUSQUETON À OEIL PERFECTIONNÉ**
KARABINERHAKEN MIT PERFEKTIONIERTER KAUSCHE
CARABINER WITH IMPROVED EYE

(30) Priorité: 25.09.2014 FR 1459089
(43) Date de publication de la demande: 30.03.2016
(73) Titulaire: Zedel, 38920 Crolles (FR)
(72) Inventeur: BRONNAZ, Alexandre, 73000 Bassens (FR)
(74) Mandataire: Hecké, Gérard

(56) Documents cités:
- DE-U1-202014 003 371
- JP-A- H10 299 756
- US-A1- 2009 079 213
- US-A1- 2013 219 673
- US-A1- 2013 232 741

## Description

### Domaine technique de l'invention

L'invention concerne un mousqueton à oeil comprenant un corps rigide en forme de crochet ouvert, et un doigt mobile monté à pivotement sur le corps autour d'un axe entre une position de fermeture, et une position d'ouverture, le corps métallique étant équipé d'un orifice additionnel pour la mise en place d'une longe d'attache.

### Etat de la technique

Les mousquetons connus, notamment du type à grande ouverture MGO du doigt, ou tout autre mousqueton directionnel à oeil, nécessite la présence d'une longe d'attache qui doit être cousue en boucle dans le trou du mousqueton. Cette opération de couture est effectuée en usine par le fabricant, ce qui rallonge la production et multiplie le nombre de références à stocker.
De plus, en cas d'usure de la corde ou sangle de la longe, il faut remplacer l'ensemble mousqueton et longe. Un tel mousqueton est décrit dans le document US 2013/0219673.

Le document DE 202014 003371 et US 2013/0232741 concernent un mousqueton double comprenant un premier mousqueton et un deuxième mousqueton, ayant les mêmes dimensions, et réunis l'un à l'autre par un barreau central. Un tel mousqueton double n'est pas consédéré comme un mousqueton à oeil.

Le document US2009/0079213 concerne un crochet de levage.

### Objet de l'invention

L'objet de l'invention consiste à réaliser un mousqueton à oeil associé à une longe d'attache pouvant être facilement mise en place et démontée par l'utilisateur.

Le mousqueton à oeil selon l'invention est caractérisé en ce que :
- l'orifice additionnel est ménagé dans un anneau ouvrable fixé à la base du corps au voisinage de l'axe, ledit anneau ayant un espace d'accès de la longe, et un élément démontable pour la fermeture ou l'ouverture de l'espace d'accès, indépendamment de la position du doigt mobile,
- l'espace d'accès s'ouvre latéralement par rapport à la direction de traction exercée par le mousqueton sous charge,
- et l'élément démontable s'étend sensiblement parallèlement à ladite direction de traction, en étant fixé au moyen d'une vis.

Le positionnement latéral de l'espace d'accès de l'anneau ouvrable facilite la mise en place de la longe, et ne gêne pas la manipulation et le déplacement du doigt mobile.

L'espace d'accès de l'anneau peut être placé, soit du côté opposé au doigt vers l'extérieur du crochet, soit être orienté selon une direction opposée, du côté du crochet et du doigt mobile.

Selon une caractéristique de l'invention, l'élément démontable est formé préférentiellement par une entretoise fixée dans l'espace d'accès au moyen d'une vis.

L'invention s'applique à tout type de mousqueton à oeil devant être associé à une longe d'attache ou d'assurage.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue éclatée en perspective d'un mousqueton à oeil selon l'invention ;
- la figure 2 montre une vue du mousqueton de la figure 1 dans l'état assemblé, le doigt étant représenté en position d'ouverture, et l'anneau ouvrable d'attache étant fermé ;
- les figures 3 et 4 illustrent le mousqueton avec le doigt mobile en position fermé, et l'anneau ouvrable respectivement ouvert et fermé ;
- la figure 5 est une vue identique de la figure 4, avec l'entretoise s'étendant parallèlement à l'axe de traction du mousqueton sous charge.

### Description d'un mode particulier de réalisation

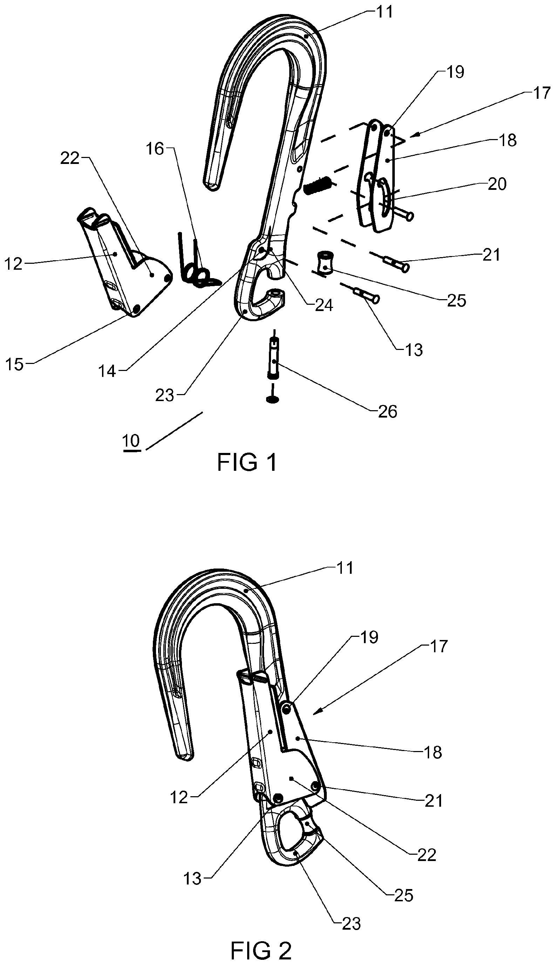

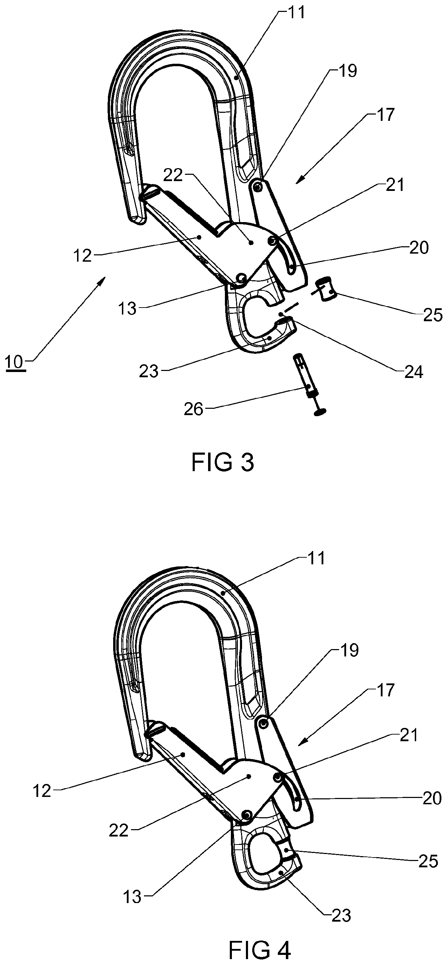

En référence aux figures 1 à 4, un mousqueton 10 ou connecteur directionnel à oeil comprend un corps 11 rigide en forme de crochet ouvert, et un doigt 12 mobile monté à pivotement sur le corps autour d'un axe 13 entre une position de fermeture (figures 3 et 4), et une position d'ouverture (figure 2). L'axe 13 est formé par un élément de liaison, par exemple une vis ou un rivet, traversant avec jeu des orifices 14, 15 respectifs du doigt 12 et du corps 11 (figure 1) pour constituer l'articulation du doigt. Le crochet du corps 11 présente une forme de U renversé, ayant un bras de droite plus long que celui de gauche.

Un ressort 16 de torsion est enfilé sur l'axe 13 à l'intérieur du doigt 12 pour solliciter ce dernier vers la position de fermeture. Un système de retenue 17 est monté sur le crochet 11 et est destiné à maintenir le doigt 12 ouvert ou fermé dans ses deux positions de fin de course. Il comporte un levier 18 articulé au crochet 11 en un point de pivotement 19, ledit levier étant équipé d'une rainure 20 curviligne en forme de croissant, dans laquelle coulisse un axe auxiliaire 21 prévu sur l'embase 22 du doigt 12.

Pour relier le mousqueton 10 à une longe d'attache (non représentée), la base du bras le plus long du corps 11 est prolongée avantageusement par un anneau 23 ouvrable ménagé sous l'axe 13 d'articulation du doigt 12. L'anneau 23 ouvert comporte un espace d'accès 24 latéral de la longe, et une entretoise 25 démontable pour la fermeture ou l'ouverture de l'espace d'accès 24.

Dans l'exemple des figures 1 et 3, l'entretoise 25 est constituée par un embout tubulaire destiné à être introduit dans l'espace d'accès 24 de l'anneau 23 pour le fermer une fois la longe introduite à l'intérieur de l'anneau 23. La fixation de l'entretoise 25 s'effectue au moyen d'une vis 26, laquelle est dotée d'une tête actionnable par un tournevis pour les opérations de vissage ou dévissage. La tête de vis 26 est logée dans un orifice traversant de la branche inférieure de l'anneau 23, et le fût de la vis traverse axialement l'entretoise 25. L'extrémité filetée de la vis 26 est vissée dans un trou borgne (non représenté) taraudé, ménagé dans la branche supérieure de l'anneau 23. La vis 26 s'étend parallèlement au bras le plus long du corps 11, et orthogonalement à l'axe 13 de pivotement du doigt 12.

Il est clair que l'ensemble vis 26 et entretoise 25 peut être remplacé par tout autre moyen de fixation démontable, et que l'anneau ouvrable peut avoir une forma quelconque.

Le positionnement latéral de l'espace d'accès 24 de l'anneau 23 ouvrable facilite la mise en place de la longe, et ne gêne pas la manipulation du doigt 12 mobile. L'espace d'accès 24 peut être placé du côté opposé au doigt 12 (cas de l'exemple des figures 1 et 3) vers l'extérieur du crochet, ou selon une variante (non représentée), du même côté du doigt 12.

La mise en oeuvre du mousqueton 10 selon l'invention ressort de la description précédente :
Pour la mise en place de la longe d'attache sur le mousqueton 10, il suffit de retirer l'entretoise 25 après dévissage et enlèvement de la vis 26. L'espace d'accès 24 est alors libre, ce qui autorise l'introduction d'une boucle de la longe à l'intérieur de l'anneau 23. La refermeture de l'entretoise 25 emprisonne la longe dans l'anneau 23 fermé.

En cas d'usure de la longe, il est facile de la remplacer grâce à l'anneau 23 ouvrable du mousqueton. Ce dernier peut ainsi être conservé s'il est encore en bon état. Il suffira de remplacer la longe.

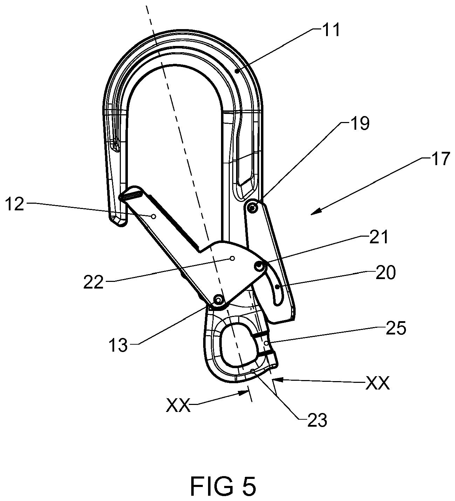

Sur la figure 5, le positionnement de l'anneau 23 est configuré pour que l'entretoise 25 s'étende parallèlement à l'axe de traction XX du mousqueton sous charge.

L'accessibilité de l'anneau ouvrable reste possible indépendamment de la position du doigt 12 mobile.

L'invention peut également être employée pour tout autre type de mousqueton métallique à oeil, comme revendiqué dans les revendications ci-jointes.

## Revendications

1. Mousqueton à oeil comprenant un corps (11) rigide en forme de crochet ouvert, et un doigt (12) mobile monté à pivotement sur le corps autour d'un axe (13) entre une position de fermeture, et une position d'ouverture, le corps étant équipé d'un orifice additionnel pour la mise en place d'une longe d'attache, **caractérisé en ce que** :
- l'orifice additionnel est ménagé dans un anneau (23) ouvrable fixé à la base du corps (11) au voisinage de l'axe (13), ledit anneau ayant un espace d'accès (24) de la longe, et un élément démontable pour la fermeture ou l'ouverture de l'espace d'accès (24), indépendamment de la position du doigt (12) mobile,
- l'espace d'accès (24) s'ouvre latéralement par rapport à la direction de traction exercée par le mousqueton sous charge,
- et l'élément démontable s'étend sensiblement parallèlement à ladite direction de traction, en étant fixé au moyen d'une vis (26).

2. Mousqueton à oeil selon la revendication 1, **caractérisé en ce que** l'espace d'accès (24) de l'anneau (23) est placé du côté extérieur par rapport au doigt (12) mobile.

3. Mousqueton à oeil selon la revendication 1, **caractérisé en ce que** l'espace d'accès (24) de l'anneau (23) est orienté du même côté par rapport au doigt (12) mobile.

4. Mousqueton à oeil selon la revendication 1 ou 3, **caractérisé en ce que** l'élément démontable est formé par une entretoise (25) tubulaire traversée par le fût de la vis (26).

## Patentansprüche

1. Karabiner mit Auge, der einen starren Körper (11) in Form eines offenen Hakens hat, und einen beweglichen Finger (12), der schwenkbar um eine Achse (13) zwischen einer Schließposition und einer Öffnungsposition montiert ist, wobei der Körper mit einer zusätzlichen Öffnung zum Einlegen einer Befestigungsleine versehen ist, **dadurch gekennzeichnet, dass**:
- die zusätzliche Öffnung in einem Ring (23) vorgesehen ist, der geöffnet werden kann und an der Basis des Körpers (11) nahe dem Bolzen (13) befestigt ist, wobei der Ring einen Zugangsbereich (24) für die Leine und ein zum Schließen oder Öffnen des Zugangsbereichs (24) abnehmbares Element aufweist, unabhängig von der Position des beweglichen Fingers (12),
- der Zugangsbereich (24) sich bezüglich der Richtung des Zugs, der von dem Karabiner unter Last ausgeübt wird, seitlich öffnet,
- und sich das abnehmbare Element im Wesentlichen parallel zur genannten Zugrichtung erstreckt und dabei mittels einer Schraube (26) befestigt ist.

2. Karabiner mit Auge nach Anspruch 1, **dadurch gekennzeichnet, dass** der Zugangsbereich (24) des Rings (23) bezüglich dem mobilen Finger (12) an der Außenseite angeordnet ist.

3. Karabiner mit Auge nach Anspruch 1, **dadurch gekennzeichnet, dass** der Zugangsbereich (24) des Rings (23) bezüglich dem mobilen Finger (12) auf der gleichen Seite angeordnet ist.

4. Karabiner mit Auge nach Anspruch 1 oder 3, **dadurch gekennzeichnet, dass** das abnehmbare Element von einem röhrenförmigen Zwischenstück (25) gebildet wird, durch das der Schaft der Schraube (26) geführt wird.

## Claims

1. A karabiner with an eye comprising a rigid body (11) in the form of an open hook, and a movable finger (12) mounted swivelling on the body around a pivot pin (13) between a closed position and an open position, the body being equipped with an additional opening for fitting an attachment lanyard, **characterized in that**:
- the additional opening is arranged in an openable ring (23) secured to the base of the body (11) in the vicinity of the pivot pin (13), said ring having an access space (24) for the lanyard, and a removable part for closing or opening of the access space (24), independently from the position of the movable finger (12),
- the access space (24) opens laterally with respect to the direction of traction exerted by the karabiner under a load,
- and the removable part extends in a substantially parallel direction to said direction of traction, being secured by means of a screw (26).

2. The karabiner with an eye according to claim 1, **characterized in that** the access space (24) of the ring (23) is placed on the outside with respect to the movable finger (12).

3. The karabiner with an eye according to claim 1, **characterized in that** the access space (24) of the ring (23) is oriented on the same side with respect to the movable finger (12).

4. The karabiner with an eye according to claim 1 or 3, **characterized in that** the removable part is formed by a tubular spacer (25) through which the shank of the screw (26) passes.
